# EUROPÄISCHE PATENTSCHRIFT

(11) **EP 0 947 272 B1**
(45) Veröffentlichungstag und Bekanntmachung des Hinweises auf die Patenterteilung: **30.11.2005**
(21) Anmeldenummer: 99104848.9
(22) Anmeldetag: 11.03.1999
(51) Int. Cl.: B23D 45/02, B23D 47/04, B23D 47/06

(54) **Verfahren und Vorrichtung zum Trennen von länglichen Werkstücken**
Method and device for cutting-up elongated workpieces
Procédé et dispositif pour la découpe de pièces allongées

(30) Priorität: 31.03.1998 DE 19814345; 04.08.1998 DE 19835138
(43) Veröffentlichungstag der Anmeldung: 06.10.1999
(73) Patentinhaber: Keller, Christoph, Dipl.-Ing., D-78234 Engen/Welschingen (DE)
(72) Erfinder: Keller, Christoph, Dipl.-Ing., D-78234 Engen/Welschingen (DE)
(74) Vertreter: Hemmerich, Friedrich Werner

(56) Entgegenhaltungen:
- DE-A- 2 620 528
- DE-A- 3 912 627
- US-A- 4 660 449

## Beschreibung

Die vorliegende Erfindung betrifft ein Verfahren zum Trennen von wenigstens einem, ggf. in einer Strangpresse hergestelltem Werkstückprofil, insbesondere Aluminiumprofil, mit einer Sägeeinrichtung, welche auf einem Gestell entlang einer X-Achse oberhalb einer Transporteinrichtung für Werkstückprofile verfahren wird, wobei eine Säge gegenüber der Sägeeinrichtung in einer X-Richtung und/oder Y-Richtung oberhalb der Transporteinrichtung für Werkstückprofile verfahren wird, sowie eine Vorrichtung zum Durchführen des Verfahrens. Ein Verfahren dieser Art ist z.B. aus DE-A-2 620 528 bekannt.

Derartige Verfahren und Vorrichtungen sind im Stand der Technik in vielfältigster Form und Ausführung bekannt. Sie dienen in erster Linie dazu, um beispielsweise Werkstückprofile, welche aus Strangpressen ausgestossen werden, abzulängen.

Die modernen Strangpressen können heutzutage äusserst schnell hohe Stückzahlen von Werkstückprofilen ausstossen. Die herkömmlichen Sägeeinrichtungen sind nicht in der Lage, dem schnellen Ausstossen von Werkstückprofilen aus Strangpressen beim Durchtrennen der Werkstückprofile nachzukommen.

An eine herkömmliche Transporteinrichtung ist eine entsprechende Sägeeinrichtung nachgeschaltet. Zwischen dem Strangpressen und dem eigentlichen Ablängen bzw. Durchtrennen der Werkstückprofile können diese verschiedene andere Verfahren durchlaufen.

Nachteilig an bisherigen derartigen Verfahren sowie Vorrichtungen ist, dass das Sägen und insbesondere das Durchtrennen von Werkstückprofilen bisher viel zu langsam erfolgt. Die modernen Strangpressanlagen sind wesentlich schneller als derartige Ablängeinrichtungen für Werkstückprofile. Daher werden die Werkstückprofile von den Transporteinrichtungen entnommen und später auf separaten Bändern abgesägt, was teuer und unerwünscht ist.

Ferner ist nachteilig, dass ein präzises Absägen und exaktes Ablängen nicht möglich ist. Hierdurch können sich Hersteller von bestimmten und gewünschten Werkstückprofilen zusätzliche Prozesskosten sparen, indem sie schon auf Mass abgelängte Strangpressprofile erhalten. Zudem sollen auch direkt die vom Band kommenden Werkstückprofile in kurzen Stücken abgelängt werden können.

Die DE 26 20 528 A1 offenbart eine Trennmaschine, insbesondere eine Säge für Walzgut. Dort ist eine untere Auflagefläche einer Spannvorrichtung höhenverlagerbar innerhalb des Rollgangs vorgesehen.

Die DE 39 12 627 A1 offenbart ein Sägeaggregat einer Aufteilanlage, bei welcher ein waagerechter Werkstück-Auflagetisch vorgesehen ist, und einen geraden langgestreckten Schlitz aufweist, der der Aufnahme des Sägeblattes dient.

Die US 4,660,449 beschreibt eine Sägeeinrichtung zum Absägen von länglichen Werkstücken, wobei im Sägetisch zur Führung des Sägeblattes ein Schlitz vorgesehen ist.

Der vorliegenden Erfindung liegt die Aufgabe zugrunde ein Verfahren sowie eine Vorrichtung zum Durchführen des Verfahrens der eingangs beschriebenen Art zu schaffen, mit denen die Fertigungszeiten vermindert werden, die Ablänggenauigkeit verfeinert und die genannten Nachteile beseitigt werden sollen.

Zur Lösung dieser Aufgabe führt, dass zum Trennen zumindest eines Werkstückprofiles zumindest ein Sägetisch in eine Transportebene der Transporteinrichtung für Werkstückprofile eingefahren wird, wobei anschliessend das zumindest eine Werkstückprofil über den zumindest einen Sägetisch eingefahren und anschliessend durchtrennt wird.

Mit der vorliegenden Erfindung lässt sich auf sehr einfache und schnelle Weise eine Sägeeinrichtung, welche über ein Rahmenelement oberhalb einer Transporteinrichtung entlang eines Gestelles verfahrbar ist, positionieren. Über vorzugweise geschliffene Führungsschienen zwischen dem Rahmenelement, an welchem die Sägeeinrichtung angeordnet ist, lässt sich die Sägeeinrichtung entlang einer Transportrichtung der Transporteinrichtung verfahren. Antriebsmotoren können exakt eine derartige Sägeeinrichtung ansteuern und ausrichten.

An dem Rahmenelement ist die Sägeeinrichtung in zwei Achsen verfahrbar. Sie kann abgesenkt und quer zur Transporteinrichtung und insbesondere quer zur Transportrichtung eines Werkstückprofiles verfahren werden.

Wesentlich ist jedoch bei der vorliegenden Erfindung, dass ein Sägetisch in die Transporteinrichtung hineingefahren wird, in dem dessen Transportwalzenelemente nach unten nachgeben. Dann kann anschliessend ein Werkstückprofil oder auch eine Mehrzahl von Werkstückprofilen über Weitertransportieren mittels der Transporteinrichtung über den Sägetisch gefahren werden. Hat das Werkstückprofil einen Anschlag erreicht, so lässt sich ein Niederhalter, welcher vorzugsweise an den, dem Rahmenelement zugeordneten Führungssäulen vorgesehen ist, nach unten auf das Werkstückprofil bewegen. Das Werkstückprofil lässt sich mittels des Niederhalters gegenüber dem in die Transporteinrichtung abgesenkten Sägetisch verspannen. Ein anschliessendes nach Untenfahren der Säge und Durchtrennen des Werkstückprofiles kann auf sehr exakte Weise vorgenommen werden.

Hierzu ist von Vorteil, wenn in dem Sägetisch eine entsprechende Nut vorgesehen ist. Auf diese kann beispielsweise dann verzichtet werden, wenn das Sägeblatt der Säge ausserhalb des Tisches das Werkstückprofil durchtrennt.

In einem weiteren bevorzugten Ausführungsbeispiel der vorliegenden Erfindung ist eine Sägeeinrichtung um einen Drehpunkt schwenkbar an einem Aufnahmeelement gelagert. Durch radiales Verschwenken wird eine Zustellung in oder entgegen einer Y-Richtung der Säge ermöglicht. Gleichzeitig ist die Sägeeinrichtung am Aufnahmeelement in X-Richtung hin- und herbewegbar. Durch Einschwenken bzw. durch Verschwenken der Säge um eine Ruhelage erfolgt ein radiales Verdrehen und damit eine Zustellung in das Werkstückprofil. Ein anschliessendes Verfahren in X-Richtung bewirkt ein Durchtrennen von in einem Niederhalter eines Sägetisches eingespannten Werkstückprofilen. Nach dem Durchtrennen kann gleichzeitig die Zurückbewegung der Sägeeinrichtung entgegen einer X-Richtung und ein gleichzeitiges Verdrehen um den Drehpunkt erfolgen, um die Säge, insbesondere dessen Sägeblatt aus dem Sägetisch herauszuschwenken.

Ist das Sägeblatt ausgeschwenkt, so kann sofort das abgelängte Werkstückprofil ausgefahren und das nächste eingefahren werden. Auf diese Weise lassen sich erhebliche fertigungstechnische Kosten beim präzisen, genauen und schnellen Abtrennen einsparen.

Ferner ist von Vorteil bei der vorliegenden Erfindung, dass eine Mehrzahl von Sägeeinrichtungen, welche über jeweils ein Rahmenelement auf einem Gestell oberhalb der Transporteinrichtung bewegbar angeordnet sind, gleichzeitig oder zeitlich versetzt ein Werkstoffprofil in mehrere Teile durchtrennen. Dabei kann die Länge einzelner Teile zwischen beispielsweise zweier Sägeeinrichtungen exakt bestimmt werden.

Hierdurch lässt sich ein einziges Werkstückprofil in einem Arbeitsvorgang, beispielsweise durch das Vorsehen von mehreren Sägeeinrichtungen, in eine beliebige Anzahl gewünschter Teile unterteilen. Dies kann auf sehr schnelle Weise geschehen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a einen schematisch dargestellten Querschnitt durch eine erfindungsgemässe Vorrichtung zum Trennen von wenigenstens einem Werkstückprofil;
Figur 1b eine zumindest teilweise dargestellte, vereinfachte Seitenansicht einer der Vorrichtung nach Figur 1 zugeordneten Transporteinrichtung;
Figur 2 eine schematisch dargestellte Seitenansicht der Vorrichtung gemäss Figur 1a in einer anderen Gebrauchslage;
Figur 3 einen schematisch dargestellten Querschnitt durch ein weiteres Ausführungsbeispiel der Vorrichtung zum Trennen von zumindest einem Werkstückprofil;
Figur 4 eine schematisch dargestellte Seitenansicht der Vorrichtung gemäss Figur 3 in einer möglichen Gebrauchslage.

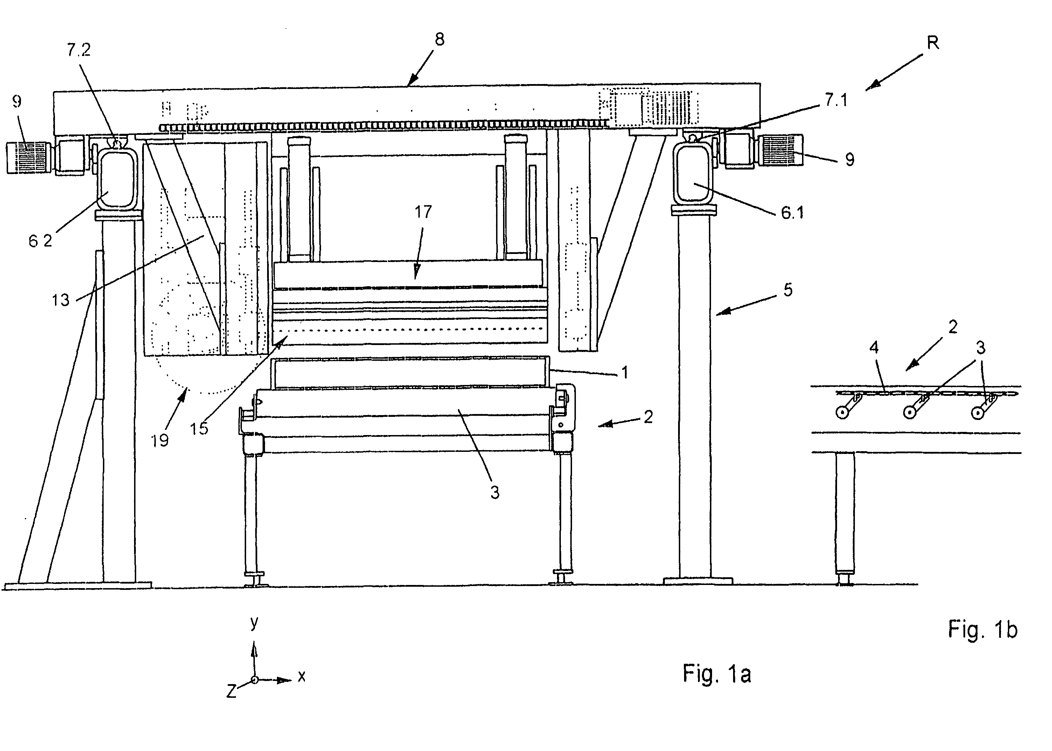

Gemäss den Figuren 1a und 1b weist eine erfindungsgemässe Vorrichtung R zum Trennen von Werkstückprofilen 1, eine Transporteinrichtung 2 auf, um Werkstückprofile 1 aus einer hier nicht dargestellten Strangpresse als Serienzuführeinrichtung einer nachgeschalteten Säge mit Längenanschlag zuzuführen.

Auf das Strangpressen von Werkstückprofilen 1, einer anschliessenden Querförderung und Kühlung der Werkstückprofile 1, insbesondere Strangpressprofile im Kühlbett sowie einer daran anschliessenden Nachbehandlung, wird nicht näher eingegangen. Die Transporteinrichtung 2 ist als Sägezuführung für das Werkstückprofil 1 ausgebildet. Diese Transporteinrichtung 2 ist herkömmlicher Art und weist eine Mehrzahl von Transportwalzenelementen 3 auf, welche über einen Antrieb 4, siehe Figur 1 b, zum Transportieren des Werkstück-profiles 1 angetrieben sind.

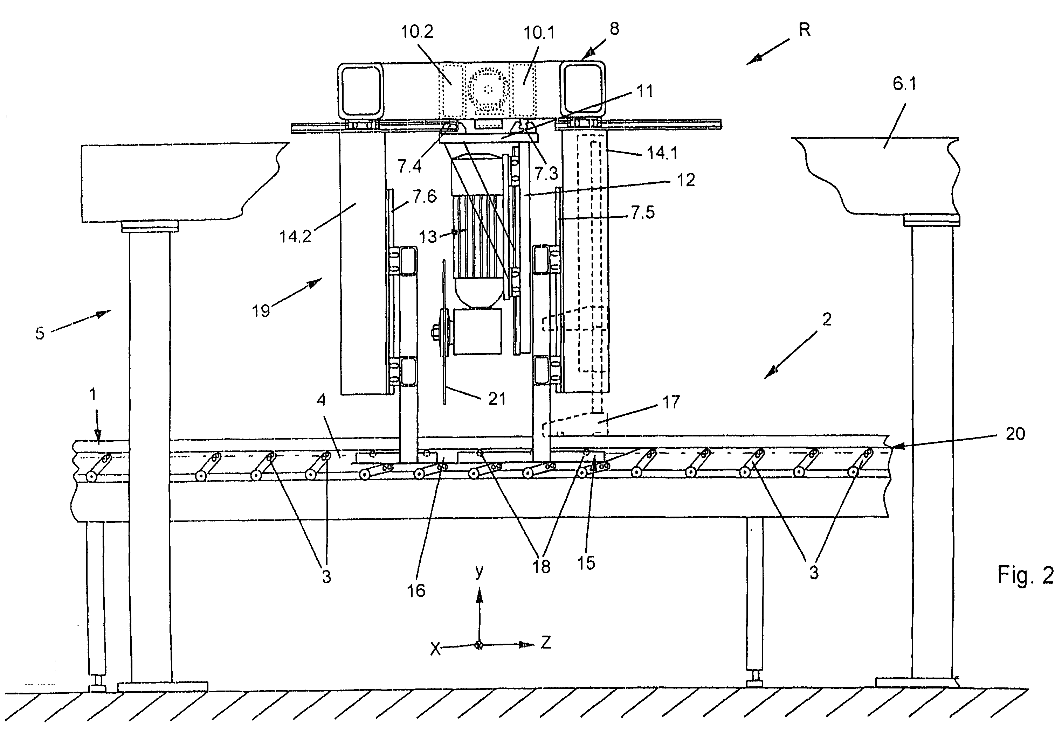

Die Besonderheit der Transportwalzenelemente 3 ist, dass diese bei Beaufschlagung von Druck, wie es insbesondere in Figur 2 dargestellt ist, nach unten, über hier nicht bezifferte Hebelelemente, gelenkig abklappbar sind. Dabei sind die Transportwalzenelemente 3, beispielsweise mittels einer Feder vorgespannt, so dass ein bestimmter Druck notwendig ist, um diese nach unten zu bewegen. Vorzugsweise sind alle Transportwalzenelemente 3 der Transporteinrichtung 2 in einem Sägebereich nach unten abklappbar bzw. ausschwenkbar.

Wird ein Transportwalzenelement 3 nach unten ausgeschwenkt, so wird es aus dem Antrieb 4 ausgekuppelt. In Figur 2 ist der Antrieb 4 als gestrichelt dargestellte Kette angedeutet. Auf diese Weise können durch Beaufschlagen mittels Druck und Bewegen nach unten die einzelnen Transporwalzenelemente von dem Antrieb 4 getrennt werden.

Die Transporteinrichtung 2 ist, wie es in den Figuren 1a und 2 dargestellt ist, in einer Koordinatenrichtung Z bewegbar angeordnet.

Ferner ist entlang einer Z-Richtung, vorzugweise seitlich neben der Transporteinrichtung 2, ein Gestell 5 vorgesehen, welches höher als die Transporteinrichtung 2 ausgebildet ist. Dabei verläuft das Gestell 5, bevorzugt dessen Portalelemente 6.1, 6.2 parallel zur Transporteinrichtung 2. Oberhalb der Portalelemente 6.1, 6.2 sind Führungsschienen 7.1, 7.2 vorgesehen, auf welchen ein Rahmenelement 8 annähernd spielfrei, exakt und präzise hin- und herverfahrbar ist. Die Antriebsmotoren 9 ermöglichen ein sehr exaktes Anfahren in jede gewünschte Position des Rahmenelementes 8 auf den Portalelementen 6.1, 6.2.

Dem Rahmenelement 8 ist, wie in Figur 2 gestrichelt darstellt, zumindest ein Sägehalterahmen 10.1, 10.2 zugeordnet, an welchem Führungsschienen 7.3, 7.4 nach unten abragen. Über eine Halteplatte 11 und einer vorzugsweise daran senkrecht anschliessenden Strebe 12 lässt sich eine Säge 13 höhenverstellbar bzw. entlang einer Y-Richtung hin- und herverfahren. Die Führungselemente bzw. Führungsschienen sind hier nicht näher bezeichnet. Die Säge 13 lässt sich ferner entlang der Führungsschienen 7.3, 7.4 bzw. entlang der Sägehalterahmen 10.1, 10.2 in X-Richtung verfahren.

Bei der vorliegenden Erfindung ist jedoch von Vorteil, dass von dem Rahmenelement 8, wie es insbesondere die Figur 2 aufzeigt, Führungssäulen 14.1, 14.2 nach unten abragen. An den Führungssäulen ist erfindungsgemäss über Führungsschienen 7.5, 7.6 zumindest ein Sägetisch 15 verfahrbar. Der Sägetisch 15 kann mit einer Sägenut 16 versehen sein.

Ferner ist dem Rahmenelement 8 oder den Führungssäulen 14.1, 14.2 ein Niederhalter 17 in Y-Richtung verfahrbar zugeordnet. Der Niederhalter 17 hat die Funktion, dass er auf das Werkstückprofil 1 aufgefahren werden kann und dieses gegen den Sägetisch 15 verspannt. Dabei kann der Niederhalter 17 das in den Sägetisch 15 eingefahrene Werkstückprofil 1 in einer gewünschten Lage wiederlösbar fixieren.

Der Sägetisch 15 kann auch mit Rollenelementen 18 versehen sein, um ein darin einfahrendes Werkstückprofil 1 nahezu reigungsfrei weiterzutransportieren.

Insgesamt ist eine Sägeeinrichtung 19 gebildet, mit welcher einstellbar jeder beliebige Abstand gegenüber einem hier nicht gezeigten Anschlag verfahrbar ist. Dabei lassen sich vorzugsweise über geschliffene Führungsschienen 7.1 bis 7.4 exakt und genau gewünschte Schneidstellen anfahren.

In einem weiteren bevorzugten Ausführungsbeispiel der vorliegenden Erfindung ist eine Vorrichtung R₁ aufgezeigt, bei welcher eine Sägeeinrichtung 25 mit Säge 13 mittels eines Gestelles 5 über einer Transporteinrichtung 2 aufgestellt ist.

Dabei ist an dem Gestell 5 und insbesondere an dessen Rahmenelement 8 in einer dargestellten Z-Richtung zumindest ein Sägehalterahmen 10.1, 10.2 entlang von Portalelementen 6.1, 6.2 auf Führungsschienen 7, bevorzugt geschliffene Führungsschienen verfahrbar gelagert. Im bevorzugten Ausführungsbeispiel sind die Portalrahmen 6.1, 6.2 wesentlich dichter nebeneinander angeordnet, als in dem Ausführungsbeispiel der Figuren 1a und 1b. Sie sind unmittelbar an dem Rahmenelement 8 des Gestelles 5 in etwa mittig über der Transporteinrichtung 2 abgehängt bzw. angeordnet.

Verschieden ist hier ferner zu den o.g. Ausführungsbeispielen, dass die Sägeeinrichtung 25 mit Säge 13 in dargestellter X-Richtung hin und her entlang eines, bevorzugt waagrecht angeordneten Aufnahmeelementes 26 verfahrbar ist. Das Aufnahmeelement 26 steht mit dem Sägehalterahmen 10.1, 10.2 in Verbindung. Auch soll ein möglichst genaues Verfahren und präzises Ablängen möglich sein. An das Aufnahmeelement 26, an welchem nicht nur die Säge 13 anschliesst und in X-Richtung verfahrbar angeordnet ist, schliesst sich über Führungssäulen 14 der Sägetisch 15 und dessen Niederhalter 17 an. Diese werden in oben beschriebener Weise betätigt.

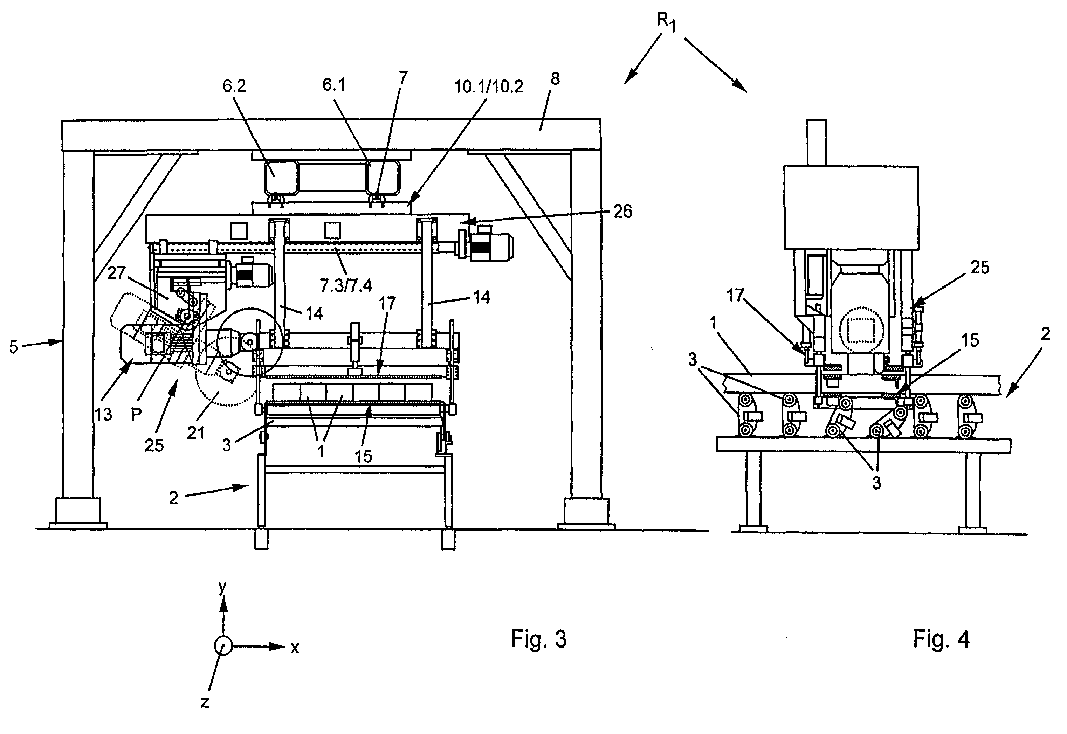

Wesentlich ist hier jedoch, dass die Sägeeinrichtung 25 in einer Ruhelage, wie es aus Figur 3 angedeutet ist, waagrecht angeordnet ist.

Soll ein Werkstückprofil 1 oder eine Mehrzahl von Werkstückprofilen 1 im Sägetisch 15 durchtrennt werden, so verschwenkt um einen Drehpunkt P die Sägeeinrichtung 25, welche am Aufnahmeelement 26 über einen Sägearm 27 gelagerte ist nach unten, so dass das Sägeblatt 21 nach unten verschwenkt wird. Dies geschieht ausserhalb des Sägetisches 15, wie es insbesondere Figur 3 aufzeigt. Anschliessend wird durch Verfahren der Sägeeinrichtung 25 in X-Richtung das zumindest eine, in oben beschriebener Weise eingespannte Werkstückprofil 1 durchtrennt, wobei die Sägeeinrichtung 25 durch eine nicht dargestellte Sägenut 16 verfahren und anschliessend nach dem vollständigen Durchtrennen der Werkstückprofile 1 um den Drehpunkt P in eine waagrechte Lage zurückgeschwenkt wird. Schon während des Zurückschwenkens der Säge 13 in die waagrechte Lage kann der Sägearm 27 und insbesondere die Säge 13 in ihre Ausgangs- und Ruhelage zurückbewegt werden. Hierdurch wird die Geschwindigkeit beim Durchtrennen von Werkstückprofilen erhöht, da dieses Zurückbewegen und Ausschwenken erheblich schneller möglich ist.

Ferner ist lediglich noch eine lineare Bewegung der Sägeeinrichtung in X-Richtung erforderlich. Die Zustellbewegung erfolgt durch Verschwenken der Säge 13 um den Drehpunkt P. Auf diese Weise lässt sich sehr leicht und kostengünstig ohne grosse Verfahrewege das Sägeblatt 21 in das Werkstückprofil 1, insbesondere in das Strangpressprofil einführen und damit durchtrennen. Auf diese Weise sind zusätzliche Kosten und Zeitersparnisse möglich.

In dem Ausführungsbeispiel gemäss Figur 4 ist dargestellt, wie der Sägetisch 15 in oben beschriebener Weise die einzelnen Transportwalzenelemente 3 nach unten drückt, um die Werkstückprofile 1 in den Sägetisch einzufahren und anschliessend mittels des Niederhalters 17 dort festzulegen. Ein Durchtrennen erfolgt dann in oben beschriebener Weise.

Die Funktionsweise der vorliegenden Erfindung ist folgende:

Die Sägeeinrichtung 19 wird gegenüber einem hier nicht gezeigten Anschlag oder nach einer bestimmten bzw. gewünschten Länge des Werkstückprofiles 1 ausgerichtet. Anschliessend wird der Sägetisch 15 in eine Transportebene 20 der Transporteinrichtung 2 hineingefahren und beaufschlagt die darunterliegenden Transportwalzenelemente 3 mit Druck, bis sie dem Druck des nach unten verfahrenden Sägetisches 15 nachgeben. Der Sägetisch 15 wird soweit nach unten abgesenkt, bis das Werkstückprofil 1 in bzw. über den Sägetisch 15 verfahren werden kann, wie es in Figur 2 angedeutet ist. Die Rollenelemente 18 unterstützen dabei den Transport des Werkstückprofiles 1 über den Sägetisch 15.

Das Werkstückprofil 1 wird zumindest bis zu einem bestimmten Anschlag mittels der Transporteinrichtung 2 transportiert. Während die Transporteinrichtung das Werkstückprofil 1 weitertransportiert, sind die nach unten gedrückten Transportwalzenelemente 2 von dem Antrieb 4 ausgekuppelt. Dies kann beispielsweise durch einfaches Eingreifen von Antriebszahnrädern in eine Antriebskette geschehen. Durch das Ausschwenken der Transportwalzenelemente 3 lässt sich eine Verbindung, beispielsweise Zahnradkette, sehr leicht trennen.

Ist eine gewünschte Länge des Werkstückprofiles 1 bzw. ein Anschlag für das Werkstückprofil 1 erreicht, so wird anschliessend durch Bewegen des Niederhalters 17 nach unten, das zumindest eine Werkstückprofil 1 zwischen Niederhalter 17 und Sägetisch 15 eingespannt. Anschliessend wird die Säge, wie es in Figur 1a dargestellt ist, entgegen einer Y-Richtung nach unten verfahren, wobei ein Sägeblatt 21 das Werkstückprofil 1 durch Verfahren der Säge 13 in X-Richtung durchtrennt. Anschliessend wird die Säge 13 nach dem Ausfahren aus dem Transporteinrichtungsbereich bzw. aus dem Werkstückprofil 1 in Y-Richtung nach oben verfahren und oberhalb des Werkstückprofiles 1 in die Ausgangslage zurückbewegt. Von dort kann ein weiterer Schnitt vorgenommen werden, wenn ein neuer Abschnitt des Werkstückprofiles 1 wieder an der Säge 13 anliegt.

In einem weiteren Ausführungsbeispiel der vorliegenden Erfindung ist die Sägeeinrichtung 25 um einen Drehpunkt P verschwenkbar angeordnet, wobei durch diese Verschwenkbewegung, welche hydraulisch gesteuert werden kann, ein Einfahren in das Werkstückprofil möglich ist. Dann muss lediglich die Sägeeinrichtung in dargestellter X-Richtung verfahren werden, um die einzelnen, nebeneinander angeordneten Werkstückprofile 1 zu durchtrennen. Anschliessend erfolgt ein Herausschwenken und ein ggf. gleichzeitiges Zurückbewegen der Sägeeinrichtung 25 entgegen der dargestellten X-Richtung. Das Herausschwenken erfolgt durch Verdrehen der Säge 13 in ihre, bevorzugt waagrecht angeordnete Ruhelage. Auch hier ist wichtig, dass auch schon ausserhalb der Transporteinrichtung 2 die Sägeeinrichtung 25 nach unten verfahren werden kann, so dass lediglich sofort nach der Positionierung der Werkstückprofile 1 ein Sägeprozess beginnen kann. Auch das gleichzeitige Ausschwenken und Zurückverfahren spart erheblich Zeit beim Durchtrennen von Werkstückprofilen 1.

Wichtig bei der vorliegenden Erfindung ist ferner, dass eine Mehrzahl von Sägeeinrichtungen 19, 25 über eine Mehrzahl von Rahmenelementen 8 auf dem Gestell 5 bzw. Portalelementen 6, 6.1, 6.2 gleichzeitig oder nacheinander ein Werkstückprofil 1 durchtrennen können. Es ist bevorzugt an eine gleichzeitige Arbeitsweise gedacht, um auf diese Weise sehr hohe Wartezeiten beim Durchtrennen von Werkstückprofilen 1 einzusparen.

Von Vorteil ist auch, dass jede Vorrichtung R, R₁ bzw. jede Sägeeinrichtung 19, 25 an jeder beliebigen Stelle auf dem Gestell 5 bzw. Portalelement 6.1, 6.2 das Werkstückprofil 1 durchtrennen kann. Dabei können mehrere Sägeeinrichtungen 19, 25 synchron sehr lange Werkstückprofile 1 in viele gleichlange oder verschiedenlange Einzelprofile durchtrennen. Hierdurch lassen sich erhebliche fertigungstechnische Kosten beim Strangpressen von Strangpressprofilen reduzieren. Auch ein sogenannter, in einem Strangpressprofil vorkommender Schweissmarkenschrott lässt sich auf diese Weise sehr einfach entnehmen.

Eine derartige erfindungsgemässe Sägeeinrichtung ist äusserst schnell und sehr präzise, so dass die Werkstückprofile direkt schon nach dem Strangpressen auf das gewünsche Mass passgenau abgelängt werden können, wie sie von beispielswiese einem Kunden gewünscht sind. Ein nachträgliches Nachbearbeiten oder erneutes Ablängen entfällt.

## Patentansprüche

1. Verfahren zum Trennen von wenigstens einem, ggf. in einer Strangpresse hergestelltem Werkstückprofil (1), insbesondere Aluminiumprofil, mit einer Sägeeinrichtung (19), welche auf einem Gestell (5) entlang einer X-Achse oberhalb einer Transporteinrichtung (2) für Werkstückprofile (1) verfahren wird, wobei eine Säge (13) gegenüber der Sägeeinrichtung (19, 25) in einer X-Richtung und/oder Y-Richtung oberhalb der Transporteinrichtung (2) für Werkstückprofile (1) verfahren wird,
**dadurch gekennzeichnet,**
**dass** zum Trennen zumindest eines Werkstückprofiles (1) zumindest ein Sägetisch (15) in eine Transportebene (20) der Transporteinrichtung (2) für Werkstückprofile (1) eingefahren wird, wobei anschliessend das zumindest eine Werkstückprofil (1) über den zumindest einen Sägetisch (13) eingefahren und anschliessend durchtrennt wird.

2. Verfahren nach Anspruch 1, **dadurch gekennzeichnet, dass** vor dem Durchtrennen der Werkstückprofile (1) zumindest ein Niederhalter (17) die Werkstückprofile (1) mit Druck beaufschlagt und gegen den Sägetisch (15) eingespannt wird.

3. Verfahren nach Anspruch 1 oder 2, **dadurch gekennzeichnet, dass** beim Einfahren des zumindest einen Sägetisches (15) in die Transporteinrichtung (2) ein Transportband und/oder Transportwalzenelemente (3) im Bereich des Sägetisches (15) nach unten soweit abgesenkt und anschliessend das Werkstückprofil (1) über den Sägetisch (15) hinwegtransportiert wird.

4. Verfahren nach wenigstens einem der Ansprüche 1 bis 3, **dadurch gekennzeichnet, dass** durch Absenken des Sägetisches (15) in die Transporteinrichtung (2) ein Antrieb (4) der abgesenkten Transportwalzenelemente (3) in diesem Bereich ausgekoppelt wird.

5. Verfahren nach wenigstens einem der Ansprüche 1 bis 4, **dadurch gekennzeichnet, dass** die Sägeeinrichtung (19, 25) in Z-Achse zur exakten Positionierung der Säge (13) auf dem Gestell (5) vor dem Absenken des Sägetisches (15) verfahren wird, wobei eine Schnittlänge zu einem Bezugspunkt, insbesondere Anschlag oder nachfolgendem Werkstückprofil exakt angefahren wird.

6. Verfahren nach wenigstens einem der Ansprüche 2 bis 5, **dadurch gekennzeichnet, dass** nach dem Festhalten des Werkstückprofiles (1) mittels zumindest einem Niederhalter (17) und dem Sägetisch (15), die Sägeeinrichtung (19, 25) seitlich neben der Transporteinrichtung (2) entgegen der Y-Richtung abgesenkt, anschliessend durch das Werkstückprofil (1) entlang der X-Richtung verfahren und dabei das Werkstückprofil 1 durchgetrennt und die Säge (13) entlang der Y-Achse aus dem Werkstückprofil (1) ausgefahren und danach durch Bewegen entlang der X-Richtung in eine Ausgangslage verfahren wird.

7. Verfahren nach wenigstens einem der Ansprüche 1 bis 6, **dadurch gekennzeichnet, dass** die Sägeeinrichtung (19, 25) linear und/oder schwenkbar um einen Drehpunkt (P) in und aus dem Werkstückprofil (1) verfahren wird.

8. Verfahren nach Anspruch 7, **dadurch gekennzeichnet, dass** durch radiales Verschwenken der Säge (13) um einen Drehpunkt (P) aus einer waagrechten Lage in eine nach unten geneigte Lage vor Beginn eines Sägeprozesses erfolgt, anschliessend ein lineares Bewegen der Säge (13) in (X)-Richtung durch das Werkstückprofil (1) erfolgt und nach dem vollständigen Durchtrennen ein Ausschwenken der Säge (13) und gleichzeitiges Bewegen entgegen einer (X)-Richtung, ermöglicht wird.

9. Verfahren nach wenigstens einem der Ansprüche 1 bis 8, **dadurch gekennzeichnet, dass** mittels einer Mehrzahl von auf dem Gestell (5) verfahrebar angeordneten Sägeeinrichtungen (19, 25) gleichzeitig und/oder zeitlich versetzt in vorherbestimmbaren Abständen zueinander zumindest ein Werkstückprofil (1) in mehrere beliebig lange Teilprofile durchtrennt wird.

10. Vorrichtung zum Trennen von wenigstens einem, ggf. in einer Strangpresse hergestelltem Werkstückprofil (1), insbesondere Aluminiumprofil, mit einer Sägeeinrichtung (19, 25), welche auf einem Gestell (5) entlang einer Z-Richtung oberhalb einer Transporteinrichtung (2) für Werkstückprofile (1) verfahrbar ist, **dadurch gekennzeichnet, dass** wenigstens ein, der zumindest einen Sägeeinrichtung (19, 25) zugeordneter Sägetisch (15) in die Transporteinrichtung (2) einfahrbar ist.

11. Vorrichtung nach Anspruch 10, **dadurch gekennzeichnet, dass** der zumindest eine Sägetisch (15) in einer Transportebene (20) der Transporteinrichtung (2) versenkbar ist.

12. Vorrichtung nach Anspruch 10 oder 11, **dadurch gekennzeichnet, dass** der Transporteinrichtung (2) eine Mehrzahl von angetriebenen oder antreibbaren Transportwalzenelementen (3) zugeordnet ist, welche von einem Antrieb (4) angetrieben sind.

13. Vorrichtung nach Anspruch 12, **dadurch** gekennzeichent, dass die Transportwalzenelemente (3) der Transporteinrichtung (2) abschwenkbar und/oder absenkbar ausgebildet sind.

14. Vorrichtung nach Anspruch 12 oder 13, **dadurch gekennzeichnet, dass** die Transportwalzenelemente (3) durch Druckbeaufschlagung nach unten abschwenkbar ausgebildet sind.

15. Vorrichtung nach wenigstens einem der Ansprüche 12 bis 14, **dadurch gekennzeichnet, dass** die Transportwalzenelemente (3) durch nach Untenschwenken aus dem Antrieb (4), insbesondere einer Antriebskette auskoppelbar sind.

16. Vorrichtung nach wenigstens einem der Ansprüche 10 bis 15, **dadurch gekennzeichnet, dass** das Gestell (5) zumindest ein Portalelement (6.1, 6.2) aufweist, auf welchem ein Rahmenelement (8) zur Aufnahme der Sägeeinrichtung (19) auf Führungsschienen (7.1, 7.2) verfahrbar ist.

17. Vorrichtung nach Anspruch 16, **dadurch gekennzeichnet, dass** das Rahmenelement (8) entlang der Portalelemente (6.1, 6.2) auf dem Gestell (5) in und entgegen einer Transportrichtung eines Werkstückprofiles (1) verfahrbar ist.

18. Vorrichtung nach Anspruch 16 oder 17, **dadurch gekennzeichnet, dass** das Rahmenelement (8) quer zur Transportrichtung zumindest einen Sägehalterahmen (10) aufweist, an welchem eine Säge (13) in einer X-Richtung entlang einer Führungsschiene (7.3, 7.4) hin- und herverfahrbar ist.

19. Vorrichtung nach Anspruch 18, **dadurch gekennzeichnet, dass** die Säge (13) in einer Y-Richtung entlang einer Führungsschiene verfahrbar ist.

20. Vorrichtung nach wenigstens einem der Ansprüche 16 bis 19, **dadurch gekennzeichnet, dass** dem Rahmenelement (8) nach unten abragende Führungssäulen (14.1, 14.2) zugeordnet sind, an welchen der zumindest eine Sägetisch (15) mit Sägeblattnut (16) in Y-Richtung verfahrbar ist.

21. Vorrichtung nach Anspruch 20, **dadurch** gekennzeichent, dass der zumindest einen Führungssäule (14.1, 14.2) wenigstens ein in Y-Richtung verfahrbarer Niederhalter (17) zugeordnet ist.

22. Vorrichtung nach Anspruch 21, **dadurch gekennzeichnet, dass** der Niederhalter (19) als Niederhalterleiste ausgebildet ist.

23. Vorrichtung nach wenigstens einem der Ansprüche 10 bis 22, **dadurch gekennzeichnet, dass** die zumindest eine Sägeeinrichtung (19, 25) linear in oder entgegen einer Y-Richtung und/oder schwenkbar um einen Drehpunkt (P) in oder aus einem Werkstückprofil (1) einfahrbar ist und/oder einschwenkbar ist.

24. Vorrichtung nach Anspruch 23, **dadurch gekennzeichnet, dass** die Sägeeinrichtung (25) aus einer waagrechten Lage in das Werkstückprofil (1) einschwenkbar und in X-Richtung zum Durchtrennen des Werkstückprofiles (1) verfahrbar ist.

25. Vorrichtung nach Anspruch 23 oder 24, **dadurch gekennzeichnet, dass** nach dem Verfahren der Säge (13) in X-Richtung die Sägeeinrichtung (25) durch Verdrehen um einen Drehpunkt (P) aus den Werkstückprofilen (1), insbesondere aus einem Sägebereich ausfahrbar und wieder zurück in Ausgangslage verfahrbar ist.

## Claims

1. Method of separating at least one workpiece profile (1), more especially an aluminium profile, which has possibly been produced in an extrusion press, by means of a sawing arrangement (19) which is displaced on a support (5) along an X axis above a conveying arrangement (2) for workpiece profiles (1), a saw (13) being displaced relative to the sawing arrangement (19, 25) in an X direction and/or Y direction above the conveying arrangement (2) for workpiece profiles (1), **characterised in that**, for the separation of at least one workpiece profile (1), at least one sawing table (15) is introduced into a plane of conveyance (20) of the conveying arrangement (2) for workpiece profiles (1), the at least one workpiece profile (1) being subsequently introduced above the at least one sawing table (13) and being subsequently severed.

2. Method according to claim 1, **characterised in that**, prior to the severance of the workpiece profiles (1), at least one holding-down means (17) acts upon the workpiece profiles (1) with pressure and is clamped in position relative to the sawing table (15).

3. Method according to claim 1 or 2, **characterised in that**, during the introduction of the at least one sawing table (15) into the conveying arrangement (2), a conveyor belt and/or conveying roller elements (3) is and/or are lowered downwardly so far, and subsequently the workpiece profile (1) is conveyed over the sawing table (15).

4. Method according to at least one of claims 1 to 3, **characterised in that**, by lowering the sawing table (15) into the conveying arrangement (2), a drive (4) of the lowered conveying roller elements (3) is disengaged in this region.

5. Method according to at least one of claims 1 to 4, **characterised in that** the sawing arrangement (19, 25) is displaced in the Z axis for the exact positioning of the saw (13) on the support (5) prior to the lowering of the sawing table (15), a cut length being brought exactly to a reference point, more especially a stop member or a subsequent workpiece profile.

6. Method according to at least one of claims 2 to 5, **characterised in that**, once the workpiece profile (1) has been retained securedly by means of at least one holding-down means (17) and the sawing table (15), the sawing arrangement (19, 25) is lowered laterally adjacent the conveying arrangement (2) in a direction in opposition to the Y direction an subsequently displaced through the workpiece profile (1) in the X direction, the workpiece profile (1) is thereby severed, and the saw (13) is moved out of the workpiece profile (1) along the Y axis and then is displaced into an initial position by moving in the X direction.

7. Method according to at least one of claims 1 to 6, **characterised in that** the sawing arrangement (19, 25) is displaced in and out of the workpiece profile (1) linearly and/or pivotably about a pivot point (P).

8. Method according to claim 7, **characterised in that**, by radially pivoting the saw (13) about a pivot point (P), a displacement is effected from a horizontal position into a downwardly inclined position prior to the commencement of a sawing process, a linear movement of the saw (13) is subsequently effected in the X direction through the workpiece profile (1) and, after the complete severance operation, an outwardly pivotal movement of the saw (13) and a simultaneous movement in a direction in opposition to an X direction are rendered possible.

9. Method according to at least one of claims 1 to 8, **characterised in that** at least one workpiece profile (1) is severed into a plurality of desirably long partial profiles by means of a plurality of sawing arrangements (19, 25), which are displaceably disposed on the support (5), simultaneously and/or staggered with respect to time at predeterminable intervals relative to one another.

10. Apparatus for separating at least one workpiece profile (1), more especially an aluminium profile, which has possibly been produced in an extrusion press, by means of a sawing arrangement (19, 25) which is displaceable on a support (5) in a Z direction above a conveying arrangement (2) for workpiece profiles (1), **characterised in that** at least one sawing table (15), which is associated with the at least one sawing arrangement (19, 25), can be introduced into the conveying arrangement (2).

11. Apparatus according to claim 10, **characterised in that** the at least one sawing table (15) is lowerable in a plane of conveyance (20) of the conveying arrangement (2).

12. Apparatus according to claim 10 or 11, **characterised in that** the conveying arrangement (2) has associated therewith a plurality of driven or drivable conveying roller elements (3), which are driven by a drive (4).

13. Apparatus according to claim 12, **characterised in that** the conveying roller elements (3) of the conveying arrangement (2) are adapted to be pivotable and/or lowerable.

14. Apparatus according to claim 12 or 13, **characterised in that** the conveying roller elements (3) are adapted to be downwardly pivotable as a result of pressure acting thereupon.

15. Apparatus according to at least one of claims 12 to 14, **characterised in that** the conveying roller elements (3) are disconnectable from the drive (4), more especially a drive chain, as a result of a downwardly pivotal movement.

16. Apparatus according to at least one of claims 10 to 15, **characterised in that** the support (5) has at least one gantry element (6.1, 6.2), on which a frame element (8) for the accommodation of the sawing arrangement (19) is displaceable on guide rails (7.1, 7.2).

17. Apparatus according to claim 16, **characterised in that** the frame element (8) is displaceable along the gantry elements (6.1, 6.2) on the support (5) in a conveying direction and in a direction in opposition to a conveying direction of a workpiece profile (1).

18. Apparatus according to claim 16 or 17, **characterised in that** the frame element (8) has at least one saw retaining frame (10) transversely relative to the conveying direction, a saw (13) being displaceable forwardly and backwardly on said saw retaining frame in an X direction along a guide rail (7.3, 7.4).

19. Apparatus according to claim 18, **characterised in that** the saw (13) is displaceable in a Y direction along a guide rail.

20. Apparatus according to at least one of claims 16 to 19, **characterised in that** the frame element (8) has associated therewith downwardly protruding guide columns (14.1, 14.2), on which the at least one sawing table (15), having a saw-blade groove (16), is displaceable in the Y direction.

21. Apparatus according to claim 20, **characterised in that** at least one holding-down means (17), which is displaceable in the Y direction, is associated with the at least one guide column (14.1, 14.2).

22. Apparatus according to claim 21, **characterised in that** the holding-down means (19) is in the form of a holding-down bar.

23. Apparatus according to at least one of claims 10 to 22, **characterised in that** the at least one sawing arrangement (19, 25) can be introduced and/or pivoted linearly in a Y direction or in a direction in opposition to a Y direction and/or pivotably about a pivot point (P) into or out of a workpiece profile (1).

24. Apparatus according to claim 23, **characterised in that** the sawing arrangement (25) is pivotable from a horizontal position into the workpiece profile (1) and displaceable in the X direction for severing the workpiece profile (1).

25. Apparatus according to claim 23 or 24, **characterised in that**, after the displacement of the saw (13) in the X direction, the sawing arrangement (25) can be moved out of the workpiece profiles (1), more especially out of a sawing range, by rotating about a pivot point (P) and is displaceable back again into the initial position.

## Revendications

1. Procédé pour la découpe d'au moins un profil de pièce (1), en particulier un profil d'aluminium, éventuellement réalisé dans une presse à filer, avec un dispositif de sciage (19) qui est déplacé sur un bâti (5), selon un axe X, au-dessus d'un dispositif de transport (2) de profils de pièce (1), une scie (13) étant déplacée par rapport au dispositif de sciage (19, 25), selon une direction X et/ou une direction Y, au-dessus du dispositif de transport (2) de profils de pièce (1),
**caractérisé par le fait que**
pour découper au moins un profil de pièce (1), au moins une table de sciage (15) est avancée vers un plan de transport (20) du dispositif de transport (2) de profils de pièce (1), ensuite l'au moins un profil de pièce (1) étant avancé au-dessus de l'au moins une table de sciage (13) et ensuite découpé.

2. Procédé selon la revendication 1, **caractérisé par le fait que**, avant la découpe des profils de pièce (1), au moins un serre-flan (17) soumet les profils de pièce (1) à de la pression et les serre contre la table de sciage (15).

3. Procédé selon la revendication 1 ou 2, **caractérisé par le fait que**, lors de l'avance de l'au moins une table de sciage (15) dans la direction du transport (2), une bande transporteuse et/ou des éléments de cylindre de transport (3) sont, à l'endroit de la table de sciage (15), descendus et, ensuite, le profil de pièce (1) est transporté au-delà de la table de sciage (15).

4. Procédé selon au moins l'une des revendications 1 à 3, **caractérisé par le fait que** par la descente de la table de sciage (15) dans la direction du transport (2) est découplé un entraînement (4) des éléments de cylindre de transport (3) descendus à cet endroit.

5. Procédé selon l'une des revendications 1 à 4, **caractérisé par le fait que** le dispositif de sciage (19, 25) est déplacé selon l'axe Z, pour le positionnement exact de la scie (13) sur le bâti (5), avant la descente de la table de sciage (15), le déplacement s'effectuant exactement d'une longueur de découpe vers un point de référence, en particulier une butée ou le profil de pièce suivant.

6. Procédé selon au moins l'une des revendications 2 à 5, **caractérisé par le fait que**, après le maintien du profil de pièce (1) au moyen d'au moins un serre-flan (17) et de la table de sciage (15), le dispositif de sciage (19, 25) est descendu latéralement à côté du dispositif de transport (2), dans la direction contraire à la direction Y, ensuite déplacé par le profil de pièce (1) dans la direction X et le profil de pièce (1) étant découpé et la scie (13) étant sortie, dans la direction de l'axe Y, du profil de pièce (1) et ensuite déplacée, par déplacement dans la direction X, en une position de départ.

7. Procédé selon l'un des revendications 1 à 6, **caractérisé par le fait que** le dispositif de sciage (19, 25) est déplacé de manière linéaire et/ou pivotable autour d'un point de rotation (P), vers et/hors du profil de pièce (1).

8. Procédé selon la revendication 7, **caractérisé par le fait que** par pivotement radial de la scie (13), autour d'un point de rotation (P), a lieu un déplacement d'une position horizontale en une position inclinée vers le bas, avant le début d'une opération de sciage, ensuite a lieu un déplacement linéaire de la scie (13) dans la direction (X) par le profil de pièce (1) et après la découpe complète est rendu possible un pivotement de la scie (13) et un déplacement simultané dans la direction contraire à une direction (X).

9. Procédé selon au moins l'une des revendications 1 à 8, **caractérisé par le fait qu'**au moyen d'une pluralité de dispositifs de sciage (19, 25) disposés de manière déplaçable sur le bâti (5) est découpé, simultanément et/ou de manière décalée dans le temps selon des intervalles pouvant être prédéterminés, au moins un profil de pièce (1) en plusieurs profils de pièce de longueur à volonté.

10. Dispositif pour la découpe d'au moins un profil de pièce (1), en particulier un profil d'aluminium, éventuellement réalisé dans une presse à filer, avec un dispositif de sciage (19, 25) qui est déplacée sur un bâti (5), dans une direction Z, au-dessus d'un dispositif de transport (2) de profils de pièce (1), **caractérisé par le fait qu'**au moins une table de sciage (15) associée à l'au moins un dispositif de sciage (19, 25) peut être avancée dans le dispositif de transport (2).

11. Dispositif selon la revendication 10, **caractérisé par le fait que** l'au moins une table de sciage (15) peut être abaissée dans un plan de transport (20) du dispositif de transport (2).

12. Dispositif selon la revendication 10 ou 11, **caractérisé par le fait qu'**au dispositif de transport (2) sont associés une pluralité d'éléments de cylindre de transport entraînés ou pouvant être entraînés (3) qui sont entraînés par un entraînement (4).

13. Dispositif selon la revendication 12, **caractérisé par le fait que** les éléments de cylindre de transport (3) du dispositif de transport (2) sont réalisés de manière à pouvoir être pivotés vers le bas et/ou abaissés.

14. Dispositif selon la revendication 12 ou 13, **caractérisé par le fait que** les éléments de cylindre de transport (3) sont réalisés de manière à pouvoir être pivotés vers le bas par soumission à de la pression.

15. Dispositif selon au moins l'une des revendications 12 à 14, **caractérisé par le fait que** les éléments de cylindre de transport (3) peuvent être découplés, par pivotement vers le bas, de l'entraînement (4), en particulier d'une chaîne d'entraînement.

16. Dispositif selon au moins l'une des revendications 10 bis 15, **caractérisé par le fait que** le bâti (5) présente au moins un élément de portique (6.1, 6.2) sur lequel un élément de cadre (8) destiné à recevoir le dispositif de sciage (19) peut être déplacé sur des rails de guidage (7.1, 7.2).

17. Dispositif selon la revendication 16, **caractérisé par le fait que** l'élément de cadre (8) peut être déplacé le long des éléments de portique (6.1, 6,2) sur le bâti (5), dans et à l'encontre d'une direction de transport d'un profil de pièce (1).

18. Dispositif selon la revendication 16 ou 17, **caractérisé par le fait que** l'élément de cadre (8) présente, transversalement à la direction de transport au moins un cadre porte-scie (10) sur lequel une scie (13) peut être déplacée en va-et-vient dans une direction X le long d'un rail de guidage (7.3, 7.4).

19. Dispositif selon la revendication 18, **caractérisé par le fait que** la scie (13) peut être déplacée dans une direction Y le long d'un rail de guidage.

20. Dispositif selon au moins l'une des revendications 16 à 19, **caractérisé par le fait qu'**à l'élément de cadre (8) sont associées des colonnes de guidage (14.1, 14.2) faisant saillie vers le bas le long desquelles peut être déplacée dans la direction Y l'au moins une table de sciage (15) à rainure à disque de scie (16).

21. Dispositif selon la revendication 20, **caractérisé par le fait qu'**à l'au moins une colonne de guidage (14.1, 14.2) est associé au moins un serre-flan (17) pouvant être déplacé dans la direction Y.

22. Dispositif selon la revendication 21, **caractérisé par le fait que** le serre-flan (19) est réalisé sous forme de latte serre-flan.

23. Dispositif selon au moins l'une des revendications 10 à 23, **caractérisé par le fait que** l'au moins un dispositif de sciage (19, 25) peut être déplacé linéairement, dans ou à l'encontre d'une direction Y et/ou de manière pivotable autour d'un point de rotation (P) vers ou hors d'un profil de pièce (1) et/ou est rabattable.

24. Dispositif selon la revendication 33, **caractérisé par le fait que** le dispositif de sciage (25) peut être pivoté d'une position horizontale vers le profil de pièce (1) et peut être déplacé dans la direction X pour découper le profil de pièce (1).

25. Dispositif selon la revendication 23 ou 24, **caractérisé par le fait que**, après le déplacement de la scie (13) dans la direction X, le dispositif de sciage (25) peut être déplacé, par rotation autour d'un point de rotation (P), hors des profils de pièce (1), en particulier hors d'une zone de sciage et peut à nouveau être déplacé vers la position de départ.
